# EUROPÄISCHE PATENTSCHRIFT

(11) **EP 3 111 267 B1**
(45) Veröffentlichungstag und Bekanntmachung des Hinweises auf die Patenterteilung: **24.01.2018**
(21) Anmeldenummer: 15706029.4
(22) Anmeldetag: 24.02.2015
(51) Int. Cl.: G02B 19/00, G02B 17/00, G02B 17/04, G02B 5/04, G02B 27/09

(54) **LICHTLEITVORRICHTUNG UND VORRICHTUNG UMFASSEND EINE LICHTLEITVORRICHTUNG UND MITTEL ZUR AUSSTRAHLUNG LINEAR ANGEORDNETER, PARALLELER LICHTSTRAHLEN**
LIGHT-CONDUCTING DEVICE, DEVICE HAVING A LIGHT-CONDUCTING DEVICE, AND MEANS FOR EMITTING LINEAR PARALLEL LIGHT BEAMS
DISPOSITIF DE GUIDAGE DE LUMIÈRE ET DISPOSITIF COMPRENANT UN DISPOSITIF DE GUIDAGE DE LUMIÈRE ET MOYENS SERVANT À ÉMETTRE DES RAYONS DE LUMIÈRE DISPOSÉS DE MANIÈRE LINÉAIRE, PARALLÈLES

(30) Priorität: 26.02.2014 DE 102014203479
(43) Veröffentlichungstag der Anmeldung: 04.01.2017
(73) Patentinhaber: Forschungsverbund Berlin E.V., 12489 Berlin (DE)
(72) Erfinder: EPPICH, Bernd, 10997 Berlin (DE)
(74) Vertreter: Gulde & Partner
(86) Internationale Anmeldenummer: PCT/EP2015/053791
(87) Internationale Veröffentlichungsnummer: WO 2015/128311

(56) Entgegenhaltungen:
- EP-A1- 1 752 812
- WO-A1-2014/026713
- WO-A2-2004/025704
- DE-A1-102006 018 504
- DE-A1-102008 033 358
- US-A1- 2005 068 633

## Beschreibung

### Gebiet der Erfindung

Die Erfindung betrifft eine Lichtleitvorrichtung und eine Vorrichtung, die eine Lichtleitvorrichtung und Mittel zur Ausstrahlung mindestens k linear angeordneter Lichtstrahlen umfasst.

### Hintergrund

Lichtleitvorrichtungen finden in der Optik, beispielsweise in der Laseroptik vielfältige Verwendung. Eine bespielhafte Verwendung ist die Umlenkung von linear angeordneten Lichtstrahlen.

Grundsätzlich bewirken optische Umlenkvorrichtungen, dass Lichtstrahlen, die mit einem von 0° und 90° unterschiedlichen Auftreffwinkel zu einer optischen Achse der Umlenkvorrichtung auf die Umlenkvorrichtung treffen, in einer Ebene, die durch die optische Achse und die Auftreffrichtung bestimmt ist, umgelenkt werden, beispielsweise so, dass die Richtung des umgelenkten Lichtstrahls mit der optischen Achse ebenfalls den Auftreffwinkel einschließt, so dass einfallender Strahl und ausfallender Strahl den zweifachen Auftreffwinkel einschließen. Viele optische Elemente eignen sich zur Umlenkung von Lichtstrahlen. Beispiele für eine optische Umlenkvorrichtung sind Spiegel und Prismen.

Prismen sind transparente Körper mit zwei parallelen Grundseiten in der Form von Dreiecken, Trapezen oder Parallelogrammen sowie mindestens drei rechteckigen Seiten, die an jede der zwei Grundseiten senkrecht angrenzen. Zumindest eine der rechteckigen Seiten grenzt nicht senkrecht an die anderen Seiten.

Auch transparente Quader mit einem Brechungsindex größer 1 können zur Strahlumlenkung dienen.

Ein typisches Anwendungsgebiet von Lichtleitvorrichtungen ist die Strahlformung zur Verbesserung der Strahlqualität eines mittels eines Laserbarrens erzeugten Lichtstrahls. Um Diodenlaser höherer Leistung verfügbar machen zu können, werden mehrere Laser-Emitter in einer ersten Richtung (slow axis) parallel zur aktiven Schicht angeordnet und zu einem Laserbauelement zusammengefasst, das als Laserbarren bezeichnet wird. Der mit dem Barren erzeugbare Strahl hat in der ersten Richtung eine deutlich schlechtere Strahlqualität als in einer zur aktiven Schicht senkrechten zweiten Richtung (fast axis). Dies liegt daran, dass der Strahldurchmesser in der ersten Richtung um Größenordnungen größer ist als in der zweiten Richtung. Die Strahlqualität ist nämlich der Kehrwert der Beugungsmaßzahl M². Die Beugungsmaßzahl M² gibt den Divergenzwinkel eines realen Laserstrahls im Vergleich zum Divergenzwinkel eines idealen Gaußstrahls mit gleichem (Taillen-)Durchmesser an. Der Divergenzwinkel des sich ergebenden Laserstrahls ist in der ersten Richtung kleiner als in der zweiten Richtung. Durch Veränderung des Strahldurchmessers in der ersten und der zweiten Richtung bei Beibehaltung der Divergenzen lässt sich der Strahl so formen, dass sich die Strahlqualitäten angleichen. Senkrecht zur ersten und zweiten Richtung ist üblicherweise die Ausstrahlungsrichtung.

So schlägt die deutsche Offenlegungsschrift DE 10 2009 031 046 A1 eine Laseroptik zur Strahlformung von in einer Ebene mittels Halbleiter- oder Diodenlaser ausgestrahltem Laserlicht vor, die einen Plattenfächer umfasst. Mehrere Platten des Plattenfächers sind in Richtung senkrecht zu ihren Oberflächenseiten versetzt angeordnet, wobei die Platten jeweils eine plane Plattenschmalseite für den Strahleintritt und eine gegenüberliegende weitere plane Plattenschmalseite für den Strahlaustritt umfassen.

US 6, 377, 410 B1, US 2005/0068633 A1, WO 2014/026713 A1 und DE 10 2008 033 358 A1 befassen sich ebenfalls mit Strahlformung.

### Zusammenfassung der Erfindung

Zur Verbesserung der Strahlformung wird eine Lichtleitvorrichtung gemäß Anspruch 1 vorgeschlagen, mit deren Hilfe der Strahldurchmesser in einer ersten Richtung verringert und in einer dazu senkrechten zweiten Richtung vergrößert werden kann. Die Lichtleitvorrichtung umfasst k>1 erste zueinander parallele Umlenkvorrichtungen, die entlang der ersten Richtung angeordnet sind und k zweite zueinander parallele Umlenkvorrichtungen, die entlang der zur ersten Richtung senkrechten zweiten Richtung angeordnet sind, wobei eine dritte Richtung zur ersten und zweiten Richtung senkrecht ist. Die ersten Umlenkvorrichtungen weisen in eine vierte Richtung gerichtete optische Achsen und die zweiten Umlenkvorrichtungen weisen entgegengesetzt zur vierten Richtung gerichtete optische Achsen auf. Dabei ist jede der zweiten Umlenkvorrichtungen bezüglich einer der ersten Umlenkvorrichtungen in einer selben fünften Richtung angeordnet, wobei die vierte Richtung Winkelhalbierende eines Winkels zwischen der dritten Richtung und der fünften Richtung ist.

Die Lichtleitvorrichtung erlaubt jeden von k Lichtstahlen, die in der ersten Richtung linear hintereinander angeordnet und in der dritten Richtung auf die ersten Umlenkvorrichtungen ausgestrahlt werden, auf die fünfte Richtung und also so umzulenken, dass die umgelenkten Lichtstrahlen auf die zweiten Umlenkvorrichtungen treffen und von diesen wieder in die dritte Richtung umgelenkt werden. Die wieder umgelenkten Lichtstrahlen sind dann in der zweiten Richtung angeordnet. So lässt sich der Strahldurchmesser (des aus den Teilstrahlen zusammengesetzten Gesamtstrahls) in der ersten Richtung verringern und in der zweiten Richtung vergrößern.

Die ersten und zweiten Umlenkvorrichtungen sind Flächen von Prismen.

So sind k rhombische Prismen von der Lichtleitvorrichtung umfasst, wobei zwei zueinander parallele Flächen jedes der Prismen eine der ersten und die jeweilige zugehörige zweite Umlenkvorrichtung bilden.

In einem Ausführungsbeispiel können die Prismen einen selben Grundflächenabstand aufweisen, wobei die Grundflächen benachbarter Prismen angrenzend aneinander angeordnet sind.

Zur Verbesserung der Strahlformung wird weiterhin eine Vorrichtung gemäß Anspruch 3 vorgeschlagen. Die Vorrichtung umfasst die erfindungsgemäß vorgeschlagene Lichtleitvorrichtung und Mittel zur Ausstrahlung mindestens k paralleler Lichtstrahlen in der dritten Richtung. Dabei können die Lichtstrahlen so ausgestrahlt werden, dass sie entlang der ersten Richtung angeordnet sind. Das Mittel ist so ausgerichtet, dass jeder der Lichtstrahlen auf je eine der ersten Umlenkvorrichtungen so ausgestrahlt werden kann, dass diese den jeweiligen Lichtstrahl auf die zugehörige zweite Umlenkvorrichtung umlenkt. Die zugehörige zweite Umlenkvorrichtung lenkt den jeweiligen Lichtstrahl wieder in die dritte Richtung um. Die wieder umgelenkten Lichtstrahlen sind dann entlang der zweiten Richtung angeordnet.

In einer Ausführungsform der Vorrichtung ist das Mittel zur Ausstrahlung von k+1 parallelen Lichtstrahlen in einer ersten Ebene geeignet, wobei ein äußerer Lichtstrahl keine Umlenkung erfährt und entlang einer Schnittlinie der ersten Ebene mit einer zweiten Ebene ausgestrahlt werden kann. Dabei breiten sich die durch die Lichtleitvorrichtung umgelenkten Lichtstrahlen in der zweiten Ebene parallel zu der Schnittlinie aus.

### Beschreibung der Figuren

Nachfolgend werden unter Zuhilfenahme folgender Figuren Ausführungsbeispiele der vorliegenden Erfindung näher erläutert.
In den Figuren zeigt
- Figur 1: eine beispielhafte Ausführungsform der erfindungsgemäßen Lichtleitvorrichtung,
- Figur 2: ein Beispiel einer Lichtleitvorrichtung, die nicht Teil der Erfindung ist,
- Figur 3: eine beispielhafte Ausführungsform der erfindungsgemäßen Vorrichtung,
- Figur 4: ein Detail der in Figur 3 gezeigten Ausführungsform,
- Figur 5: eine andere Ansicht des in Figur 4 gezeigten Details der Ausführungsform aus Figur 3 und
- Figur 6: noch eine weitere beispielhafte Ausführungsform der erfindungsgemäßen Lichtleitvorrichtung.

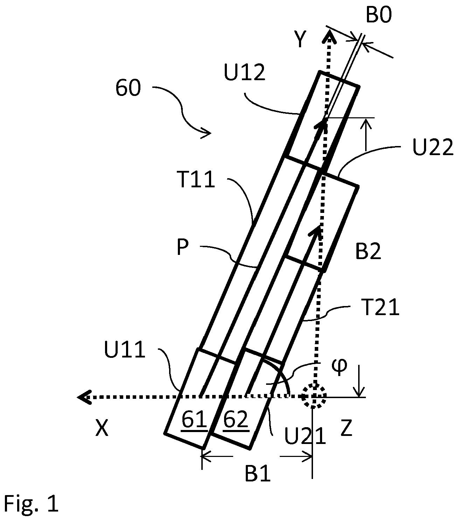

Figur 1 zeigt eine beispielhafte Ausführungsform der erfindungsgemäßen Lichtleitvorrichtung 60. Die Lichtleitvorrichtung 60 wird hier beispielhaft durch einen transparenten Körper gebildet. Der Körper 60 umfasst im Beispiel zwei Teilkörper 61, 62 die als rhombische Umlenkprismen ausgebildet sind, also Blöcke mit parallelogrammförmigen Grundflächen. Kanten einer der Grundflächen schließen einen nicht lotrechten Winkel ϑ ein. Grundflächen benachbarter Prismen grenzen aneinander an. Kanten der Grundflächen eines jeweiligen Prismas sind jeweils durch zwei Paare zu den Grundflächen senkrechter und zueinander paralleler Mantelflächen verbunden. Die Teilkörper haben einen selben Grundflächenabstand.

Eines der Paare paralleler Mantelflächen umfasst im Ausführungsbeispiel also für alle Teilkörper gleichgroße Mantelflächen, die nachfolgend auch als Umlenkflächen U11, U12, U21, U22 bezeichnet werden, da durch diese Lichtstrahlen im Körper umgelenkt werden können. Die an die Umlenkflächen angrenzenden Mantelflächen werden nachfolgend auch als Transmissionsflächen T11, T21 bezeichnet, da durch diese ein Lichtstrahl in den Teilkörper zur Umlenkung hinein und nach der Umlenkung heraus transmittiert werden kann. Die Teilkörper haben einen selben Grundflächenabstand, einen selben Transmissionsflächenabstand und unterschiedliche, individuelle Umlenkflächenabstände.

Die Teilkörper 61, 62 sind so zueinander angeordnet, dass jeweils erste Umlenkflächen U11, U21 des Paares Umlenkflächen jedes Teilkörpers 61, 62, bezüglich einer ersten Richtung X (x-Richtung in der Figur 1) hintereinander und bezüglich einer zweiten Richtung Y (y-Richtung in der Figur 1) nebeneinander angeordnet, wobei die zweite Richtung Y zur ersten Richtung X senkrecht steht. Die jeweils zweiten Umlenkflächen U12, U22 des Paares sind bezüglich der zweiten Richtung Y hintereinander und bezüglich der ersten Richtung nebeneinander angeordnet. Dabei sind die Flächennormalen der ersten Umlenkflächen U11, U21 zueinander parallel. Ebenso sind die Flächennormalen der zweiten Umlenkflächen U12, U22 zueinander parallel, jedoch antiparallel zu den Flächennormalen der ersten Umlenkflächen U11, U21. Die Flächennormalen der Umlenkflächen, also die optischen Achsen der Umlenkflächen, schließen mit einer dritten Richtung Z (z-Richtung in Figur 1), die zur ersten und zur zweiten Richtung senkrecht steht, einen Winkel von 45° bzw. 135° ein, wobei 360° dem Vollkreis entspricht. Projektionen der Flächennormalen der ersten Umlenkflächen U11, U21 auf die Ebene, die von der ersten Richtung X und der zweiten Richtung Y aufgespannt wird, weisen dabei in eine vierte Richtung P. Schnittlinien der Ebene mit jeweiligen weiteren Ebenen, die von der Flächennormale der Ebene und der jeweiligen Flächennormale der jeweiligen ersten Umlenkfläche aufgespannt wird, erstrecken sich in die vierte Richtung. Die jeweils zweite Umlenkfläche U12, U22 eines jeden der Prismen liegt von der ersten Umlenkfläche U11, U21 des jeweiligen Prismas aus gesehen in der vierten Richtung P, die mit der ersten Richtung X einen von 0° und von 90° unterschiedlichen Winkel ϕ einschließt. In beispielhaften Ausführungsformen sind Winkel zwischen 40° und 50° realisiert. Andere beispielhafte Ausführungsformen weisen Winkel zwischen 43° und 47° auf.

Lichtstrahlen, die in der ersten Richtung X hintereinander angeordnet und bezüglich der zweiten Richtung Y nebeneinander angeordnet sind und in der dritten Richtung Z ausgestrahlt werden, treten durch die Transmissionsflächen T11, T21 in die Teilkörper ein und treffen auf die ersten Umlenkflächen U11, U21. Dort erfahren sie eine erste Umlenkung. Die einfach umgelenkten Lichtstrahlen breiten sich in den Teilkörpern in der vierten Richtung P aus. Sie treffen daher auf die zweiten Umlenkflächen U12, U22. Hier erfahren sie eine zweite Umlenkung. Die zweifach umgelenkten Lichtstrahlen breiten sich wieder in der dritten Richtung Z aus und verlassenden Teilkörper wieder durch die den Transmissionsflächen T11, T21 gegenüberliegenden Transmissionsflächen. Die zweifach umgelenkten Lichtstrahlen sind bezüglich der ersten Richtung X nebeneinander und bezüglich der zweiten Richtung Y hintereinander angeordnet.
Dabei behält jeder einzelne Strahl bei der Umlenkung durch die Lichtleitvorrichtung Strahlbreiten und Divergenz in der ersten Richtung X und der zweiten Richtung Y bei. Typischerweise ist jeder einzelne Strahl nach der Kollimation durch FAC und SAC elliptisch mit einer Breite B0 in der zweiten Richtung Y und einer Breite B0' in der ersten Richtung X. Der durch die einzelnen Strahlen gebildete Gesamtstrahl ändert jedoch seine Strahlbreite, der eintretende Strahl hat bezüglich der ersten Richtung X eine Breite B1 und bezüglich der zweiten Richtung Y die Breite B0, die der Breite eines Einzelstrahls in der zweiten Richtung entspricht. Dabei ist B1 größer als B0. Nach Austreten aus der Umlenkvorrichtung 60 hat der umgelenkte Gesamtstrahl in der ersten Richtung X die Breite B0' eines Einzelstrahls in der ersten Richtung X und bezüglich der der zweiten Richtung Y eine größere Breite B2. Das Verhältnis von B2 zu B1 ist durch den Winkel ϕ bestimmt: B2 = B1*tan ϕ.
Zur Bestimmung der Strahlqualität des umgelenkten Gesamtstrahls in der ersten Richtung X und der zweiten Richtung Y werden durch die Änderung der Strahlbreite daher andere Referenzdivergenzwinkel idealer Gaußstrahlen verwendet als bei der Bestimmung der Strahlqualität des noch nicht umgelenkten Gesamtstrahls. So kann die Strahlqualität in der ersten Richtung X und der zweiten Richtung Y aneinander angeglichen werden.

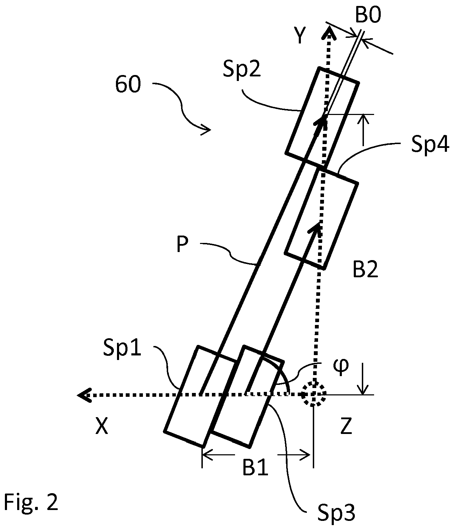

Im in Figur 2 dargestellten Beispiel, das nicht zur Erfindung gehört, ist die Lichtleitvorrichtung 60 durch Spiegel Sp1, Sp2, Sp3 und Sp4 realisiert. Dabei übernehmen die Spiegel Sp1 und Sp3 die Rolle der ersten Umlenkflächen und die Spiegel Sp2 und Sp4 die der zweiten Umlenkflächen.

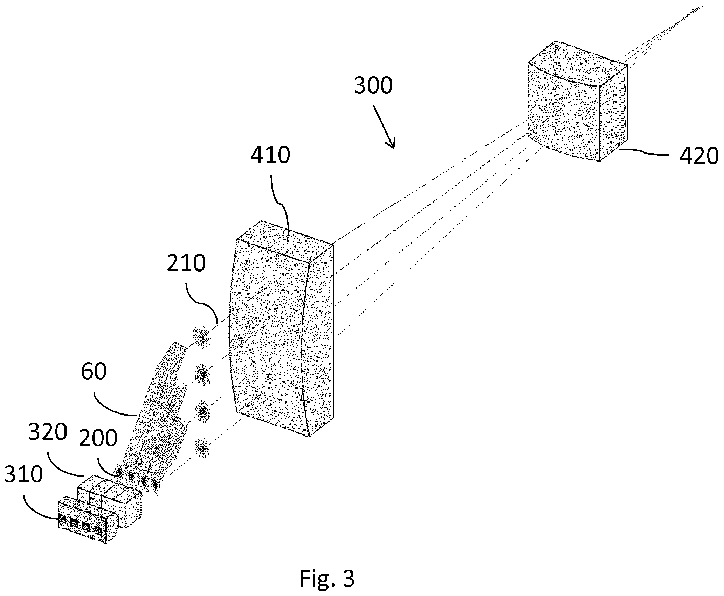

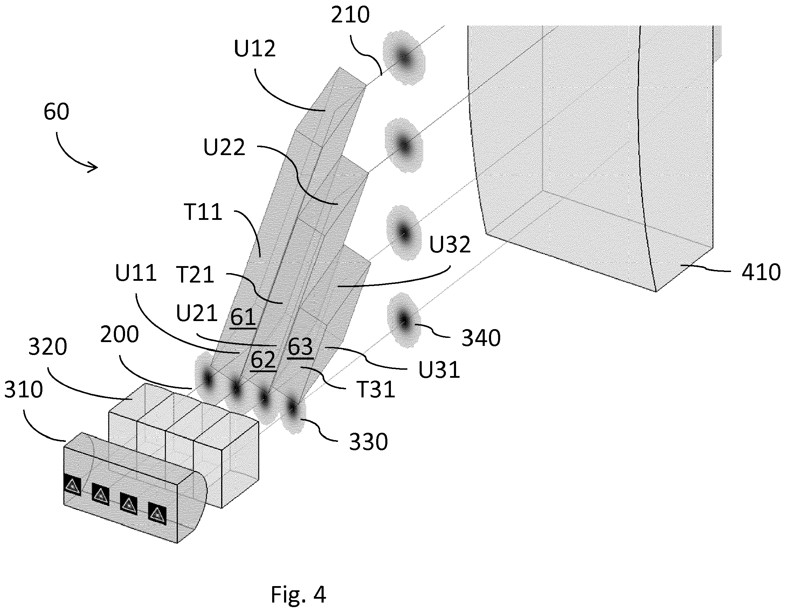

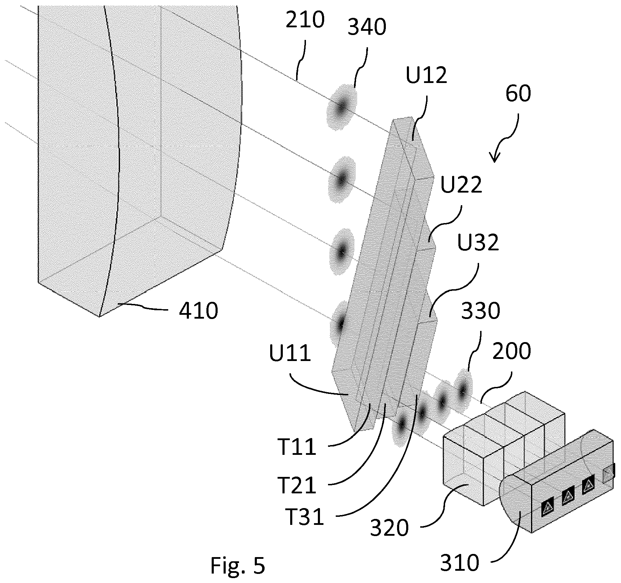

Figur 3 zeigt eine beispielhafte Ausführungsform der erfindungsgemäßen Vorrichtung 300 mit einer beispielhaften Ausführungsform der erfindungsgemäßen Lichtleitvorrichtung 60 und Mittel zur Ausstrahlung linear angeordneter, paralleler Lichtstrahlen. Figuren 4 und 5 zeigen Details der in Figur 3 gezeigten Ausführungsform. Die erfindungsgemäße Lichtleitvorrichtung ist besonders bei der Verwendung von Laserbarren für die Faseroptik nützlich. Laserbarren sind mehrere Halbleiter- oder Laserdioden oder -halbleiter, die in einer Reihe zu einem Laserbauelement zusammengesetzt sind, um so höhere Leistungen als mit den einzelnen Laserquellen erzeugen zu können. Auf Grund der Charakteristik der Laserquellen und ihrer Anordnung hat der resultierende Strahl in einer Ebene zwar eine etwas geringere Divergenz, aber eine viel größere Breite als senkrecht zur Ebene. Die Divergenz sinkt um einen Faktor von 2 bis 3, während die Strahlbreite um ein oder mehr Größenordnungen größer ist. Dies bewirkt stark unterschiedliche Strahlqualitäten in der Ebene und senkrecht dazu. Für die Faseroptik und andere Anwendungen ist es jedoch wünschenswert, die Strahlqualitäten in beiden Richtungen aneinander anzugleichen.

Die Vorrichtung 300 umfasst einen Laserbarren zur Ausstrahlung paralleler in einer Ebene mit konstanter Distanz zueinander angeordneter Laserstrahlen. Im dargestellten Beispiel werden 4 Laserstrahlen bezüglich einer Anordnungsrichtung (erste Richtung X, sogenannte slow axis) hintereinander ausgestrahlt. Die ausgestrahlten Laserstrahlen sind vertikal (zweite Richtung Y, sogenannte fast axis), also senkrecht zur ersten Richtung X, kollimiert. Ein weiterhin umfasstes Array 320 aus SAC-Elementen kollimiert jeden vertikal kollimierten Laserstrahl horizontal, also senkrecht zur Ausstrahlungsrichtung und parallel zur Anordnungsrichtung der Laserstrahlen.

Im Beispiel schließen die Umlenkflächen U11, U12, U21, U22, U31, U32 mit den Transmissionsflächen T11, T21, T31 einen Winkel von 45° ein. Die FAC-Linse 310 und das SAC-Array 320 sind im Verhältnis zu den ersten der Umlenkflächen so angeordnet, dass die Ausstrahlungsrichtung Z der Laserstrahlen 200 parallel zur Flächennormale der Transmissionsflächen T11, T21, T31 ist.

Dann treten drei der Laserstrahlen 200 senkrecht durch eine der Transmissionsflächen T11, T21, T31 in den Körper 60 ein, werden durch die ersten Umlenkflächen U11, U21, U31 total reflektiert und so umgelenkt, dass sie im Körper parallel zu den Transmissionsflächen T11, T21, T31 und zu den Grundflächen verlaufen. Anschließend werden sie von den zweiten Umlenkflächen U12, U22, U32 wieder total reflektiert und so umgelenkt, dass sie wieder parallel zur Ausstrahlungsrichtung Z verlaufen und senkrecht durch die andere der Transmissionsflächen austreten. Die im Ausführungsbeispiel zweimal umgelenkten Laserstrahlen 210 verlaufen dann in einer anderen Ebene, die gegenüber der Ebene um 90° um die Ausstrahlungsrichtung Z gedreht ist. Im dargestellten Beispiel wird einer der Laserstrahlen entlang einer Schnittlinie der einen Ebene mit der anderen Ebene ausgestrahlt und nicht umgelenkt. Die umgelenkten Laserstrahlen werden durch die Lichtleitvorrichtung nicht gedreht, so dass die Divergenz der Einzelstrahlen, und also auch des Gesamtstrahls, in der ersten Richtung X und in der zweiten Richtung Y unverändert bleibt. Geändert wird hingegen die Breite des Gesamtstrahls in der ersten Richtung X und in der zweiten Richtung Y.

Der resultierende Gesamtstrahl weist nun eine senkrecht und parallel zur Ebene aneinander angeglichene Strahlqualität auf und wird im Ausführungsbeispiel durch zwei Linsen 410, 420 in eine optische Faser eingekoppelt.

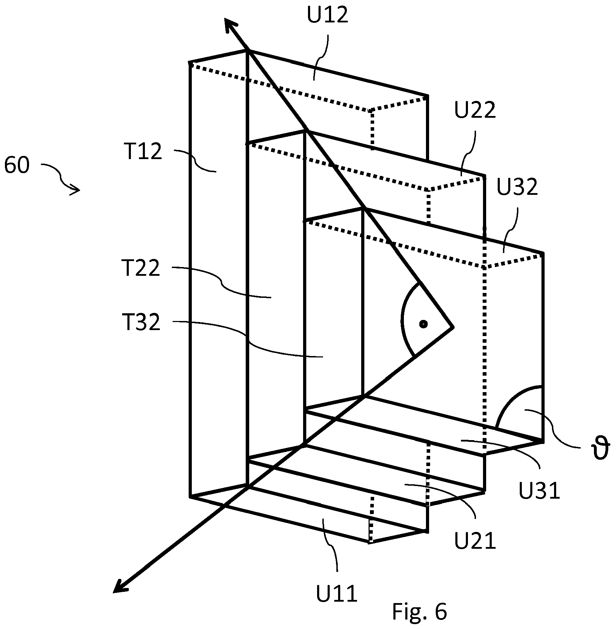

Figur 6 zeigt noch ein weiteres Ausführungsbeispiel der erfindungsgemäßen Lichtleitvorrichtung 60. Wieder bilden rhombische Prismen, deren zweite Transmissionsflächen T12, T22, T32 jeweils einem Winkel ϑ mit den Umlenkflächen U11, U12, U21, U22, U31, U32 einschließen, die Lichtleitvorrichtung 60. Erkennbar liegen erste Ecken der rhombischen Prismen auf einer ersten Gerade. Auf einer dazu senkrechten zweiten Geraden liegen zweite Ecken, die zu den ersten Ecken benachbart sind, also durch eine Kante des jeweiligen Prismas verbunden sind. Dabei liegen die zweiten Transmissionsflächen T12, T22, T32 in einer Ebene.

## Patentansprüche

1. Lichtleitvorrichtung (60) umfassend k>1 erste zueinander parallele Umlenkvorrichtungen (U11, U21, U31), die so ausgebildet sind, dass Lichtstrahlen, die mit einem von 0° und 90° unterschiedlichen Auftreffwinkel zu einer optischen Achse der Umlenkvorrichtung auf die Umlenkvorrichtung treffen, in einer Ebene, die durch die optische Achse und die Auftreffrichtung bestimmt ist, so umgelenkt werden, dass die Richtung des umgelenkten Lichtstrahls mit der optischen Achse ebenfalls den Auftreffwinkel einschließt, so dass einfallender Strahl und ausfallender Strahl den zweifachen Auftreffwinkel einschließen, und die entlang einer ersten Richtung (X) angeordnet sind, und k zweite zueinander parallele Umlenkvorrichtungen (U12, U22, U32), die entlang einer zweiten Richtung (Y) angeordnet sind, wobei eine dritte Richtung (Z) zur ersten und zweiten Richtung (X, Y) senkrecht ist und wobei jede der zweiten Umlenkvorrichtungen (U12, U22, U32) bezüglich einer der ersten Umlenkvorrichtungen (U11, U21 ,U31) in einer selben vierten Richtung (P) angeordnet ist, **dadurch gekennzeichnet, dass** die ersten Umlenkvorrichtungen (U11, U21, U31) in eine fünfte Richtung gerichtete optische Achsen aufweisen, **dadurch gekennzeichnet, dass** die zweite Richtung senkrecht zur ersten Richtung ist und die zweiten Umlenkvorrichtungen (U12, U22, U32), entgegengesetzt zur fünften Richtung gerichtete optische Achsen aufweisen, wobei die fünfte Richtung Winkelhalbierende eines Winkels zwischen der dritten und der vierten Richtung ist, wobei die ersten und zweiten Umlenkvorrichtungen (U11, U21, U31, U12, U22, U32), Flächen von Prismen sind, und wobei die Lichtleitvorrichtung k rhombische Prismen (61, 62, 63) umfasst, wobei zwei zueinander parallele Flächen jedes der Prismen (61, 62, 63) eine der ersten und die jeweilige zugehörige zweite Umlenkvorrichtung (U11, U21, U31, U12, U22, U32) bilden.

2. Lichtleitvorrichtung nach Anspruch 1, wobei die Prismen (61, 62, 63) einen selben Abstand zwischen Grundflächen aufweisen und wobei die Grundflächen benachbarter Prismen angrenzend aneinander angeordnet sind.

3. Vorrichtung (300) umfassend eine Lichtleitvorrichtung (60) nach einem der vorangehenden Ansprüche und Mittel (310) zur Ausstrahlung mindestens k paralleler Lichtstrahlen in der dritten Richtung (Z), wobei das Mittel (310) so ausgerichtet ist, dass jeder der Lichtstrahlen auf je eine der ersten Umlenkvorrichtungen (U11, U21, U31), ausgestrahlt werden kann.

4. Vorrichtung nach Anspruch 3, wobei das Mittel (310) zur Ausstrahlung von k+1 parallelen Lichtstrahlen in einer ersten Ebene geeignet ist und wobei ein äußerer Lichtstrahl keine Umlenkung erfährt und entlang einer Schnittlinie der ersten Ebene mit einer zweiten Ebene ausgestrahlt werden kann, wobei die durch die Lichtleitvorrichtung (60) umgelenkten Lichtstrahlen sich in der zweite Ebene parallel zu der Schnittlinie ausbreiten.

## Claims

1. A light-conducting device (60), comprising k>1 first deflection devices (U11, U21, U31) that are parallel to one another and formed such that light beams which are incident onto the deflection device at an incident angle different from 0° and 90° with respect to an optical axis of the deflection device are deflected in a plane defined by the optical axis and the incident direction in such a way that the direction of the deflected light beam also includes the incident angle with the optical axis, so that the incident beam and the emergent beam include twice the incident angle, and that are arranged along a first direction (X), and k second deflection devices (U12, U22, U32) that are parallel to one another and arranged along a second direction (Y), wherein a third direction (Z) is perpendicular to the first and second direction (X, Y), and wherein each of the second deflection devices (U12, U22, U32) is arranged in a same fourth direction (P) with respect to one of the first deflection devices (U11, U21, U31), **characterized in that** the first deflection devices (U11, U21, U31) comprise optical axes directed in a fifth direction, **characterized in that** the second direction is perpendicular to the first direction and the second deflection devices (U12, U22, U32) comprise optical axes directed opposite to the fifth direction, wherein the fifth direction is an angle bisector of an angle between the third and the fourth direction, wherein the first and second deflection devices (U11, U21, U31, U12, U22, U32) are surfaces of prisms, and wherein the light-conducting device comprises k rhombic prisms (61, 62, 63), wherein two surfaces of each of the prisms (61, 62, 63) that are parallel to one another form one of the first and the respective associated second deflection device (U11, U21, U31, U12, U22, U32).

2. The light-conducting device according to claim 1, wherein the prisms (61, 62, 63) comprise a same distance between bases, and wherein the bases of adjacent prisms are arranged adjacent one another.

3. A device (300), comprising a light-conducting device (60) according to one of the preceding claims and means (310) for emitting at least k parallel light beams in the third direction (Z), wherein the means (310) is oriented such that each of the light beams can be emitted onto one of the first deflection devices (U11, U21, U31), respectively.

4. A device according to claim 3, wherein the means (310) is adapted to emit k+1 parallel light beams in a first plane, and wherein an outer light beam does not undergo a deflection and can be emitted along an intersection line of the first plane and a second plane, wherein the light beams deflected by the light-conducting device (60) propagate parallel to the intersection line in the second plane.

## Revendications

1. Dispositif de guidage de lumière (60) comprenant k>1 premiers dispositifs de déviation (U11, U21, U31) parallèles les uns aux autres qui sont réalisés de telle manière que des rayons lumineux étant incidents sur le dispositif de déviation à un angle d'incidence différent de 0° et 90° par rapport à un axe optique du dispositif de déviation soient déviés dans un plan déterminé par l'axe optique et la direction d'incidence de telle manière que la direction du rayon lumineux dévié forme également l'angle d'incidence avec l'axe optique de sorte que le rayon incident et le rayon sortant forment deux fois l'angle d'incidence, et qui sont disposés le long d'une première direction (X), et k seconds dispositifs de déviation (U12, U22, U32) parallèles les uns aux autres qui sont disposés le long d'une deuxième direction (Y), une troisième direction (Z) étant perpendiculaire à la première et deuxième directions (X, Y), et chacun des seconds dispositifs de déviation (U12, U22, U32) étant disposé dans une même quatrième direction (P) par rapport à l'un des premiers dispositifs de déviation (U11, U21, U31), **caractérisé en ce que** les premiers dispositifs de déviation (U11, U21, U31) comprennent un axe optique dirigé dans une cinquième direction, **caractérisé en ce que** la deuxième direction est perpendiculaire à la première direction et que les seconds dispositifs de déviation (U12, U22, U32) comprennent des axes optiques dirigés dans une direction opposée à la cinquième direction, la cinquième direction étant la bissectrice d'un angle formé entre la troisième et quatrième directions, les premiers et seconds dispositifs de déviation (U11, U21, U31, U12, U22, U32) étant des surfaces de prismes, et le dispositif de guidage de lumière k comprenant des prismes rhombiques (61, 62, 63), deux surfaces parallèles l'une à l'autre de chacun des prismes (61, 62, 63) formant l'un du premier dispositif de déviation (U11, U21, U31) et le second dispositif de déviation (U12, U22, U32) associé respectif

2. Dispositif de guidage de lumière selon la revendication 1, dans lequel les prismes (61, 62, 63) comprennent une même distance entre des surfaces de base, les surfaces de base de prismes adjacents étant disposées adjacentes les unes aux autres.

3. Dispositif (300) comprenant un dispositif de guidage de lumière (60) selon l'une des revendications précédentes et des moyens (310) servant à émettre au moins k rayons lumineux parallèles dans la troisième direction (Z), le moyen (310) étant orienté de telle manière que chacun des rayons lumineux puisse être émis respectivement sur l'un des premiers dispositifs de déviation (U11, U21, U31).

4. Dispositif selon la revendication 3, dans lequel le moyen (310) est apte à émettre k+1 rayons lumineux parallèles dans un premier plan, un rayon lumineux extérieur ne subissant pas de déviation et pouvant être émis le long d'une ligne d'intersection du premier plan et d'un deuxième plan, les rayons lumineux déviés par le dispositif de guidage de lumière (60) se propageant dans le deuxième plan parallèlement à la ligne d'intersection.
